# EUROPÄISCHE PATENTSCHRIFT

(11) **EP 3 924 270 B1**
(45) Veröffentlichungstag und Bekanntmachung des Hinweises auf die Patenterteilung: **29.03.2023**
(21) Anmeldenummer: 20705178.0
(22) Anmeldetag: 13.02.2020
(51) Int. Cl.: B65D 85/804, A47J 31/06

(54) **PORTIONSKAPSEL ZUR ZUBEREITUNG EINES GETRÄNKS IN EINER GETRÄNKEHERSTELLUNGSMASCHINE UND SYSTEM ZUR ZUBEREITUNG EINES GETRÄNKS AUS DIESER PORTIONSKAPSEL**
SINGLE-SERVE CAPSULE FOR PREPARING A BEVERAGE IN A BEVERAGE PREPARATION MACHINE, AND SYSTEM FOR PREPARING A BEVERAGE FROM SAID SINGLE-SERVE CAPSULE
CAPSULE SERVANT À PRÉPARER UNE BOISSON DANS UNE MACHINE DE PRODUCTION DE BOISSON ET SYSTÈME SERVANT À PRÉPARER UNE BOISSON À PARTIR DE CETTE CAPSULE

(30) Priorität: 13.02.2019 DE 102019201904; 23.05.2019 DE 102019207557
(43) Veröffentlichungstag der Anmeldung: 22.12.2021
(73) Patentinhaber: GCS German Capsule Solution GmbH, 51469 Bergisch Gladbach (DE)
(72) Erfinder: KRÜGER, Marc, 51467 Bergisch Gladbach (DE); EMPL, Günter, 51429 Bergisch Gladbach (DE)
(74) Vertreter: Loock, Jan Pieter
(86) Internationale Anmeldenummer: PCT/EP2020/053677
(87) Internationale Veröffentlichungsnummer: WO 2020/165302

(56) Entgegenhaltungen:
- WO-A1-2014/184653
- WO-A1-2016/041596
- WO-A1-2018/067009
- WO-A1-2018/185058

## Beschreibung

### Stand der Technik

Die vorliegende Erfindung geht aus von einer Portionskapsel (1) zur Zubereitung eines Getränks in einer Getränkeherstellungsmaschine, wobei die Portionskapsel (1) ein Basiselement (2) mit einem Hohlraum (3) zum Aufnehmen eines Getränkerohmaterials und einen den Hohlraum (3) verschließenden Kapseldeckel (4) aufweist, wobei das Basiselement (2) einen Kapselboden, einen umlaufenden Flansch und eine sich zwischen dem Kapselboden und dem umlaufenden Flansch erstreckende Kapselwandung umfasst, wobei der Kapseldeckel (4) an einer Siegelfläche am Flansch (7) befestigt ist, wobei der Flansch an seinem äußeren freien Ende einen umlaufenden Wulst aufweist, wobei an dem Flansch (7) ein Dichtelement in Form einer vom Kapseldeckel weg weisenden Dichtsicke vorgesehen ist, wobei sich auf der Seite des Kapseldeckels zwischen dem Wulst und der Dichtsicke eine Siegelebene, an welchem der Kapseldeckel festgesiegelt ist, auf dem Flansch erstreckt und wobei die Dichtsicke eine innere Flanke auf Seiten der Kapselwandung und eine äußere Flanke auf Seiten des Wulsts umfasst.

Solche Portionskapseln sind aus dem Stand der Technik bekannt. Beispielsweise offenbart die Druckschrift WO 2016 / 186 488 A1 eine solche gattungsgemäße Portionskapsel bekannt. Diese Portionskapsel ist dazu vorgesehen, in eine Brühkammer eingelegt zu werden, in welcher der Kapselboden perforiert wird, um Brühflüssigkeit in Form heißen Wassers unter Druck in den Hohlraum einzuleiten. Hierdurch erhöht sich der Druck innerhalb der Portionskapsel, wodurch der Kapseldeckel gegen eine Relief- oder Pyramidenplatte in der Brühkammer gedrückt wird und bei Erreichen eines vorbestimmten Druckes an den Kontaktstellen perforiert wird. Das durch Wechselwirkung zwischen dem eingeleiteten Wasser mit dem Getränkerohmaterial, insbesondere gerösteter und gemahlener Kaffee, entstandene Getränk verlässt sodann durch diese Perforationsstellen in der Deckelfolie die Kapsel.

Alle solche Portionskapseln haben gemein, dass eine hinreichende Abdichtung zwischen der Brühkammer und der Portionskapsel im Bereich des Kapselflansches notwendig ist, damit das Wasser innerhalb der Brühkammer durch das Bett aus Getränkerohmaterial zur Bildung des Getränks fließt und nicht außerhalb der Portionskapsel, also zwischen einer Wandung der Brühkammer und der Außenseite der Kapselwandung, am Getränkerohmaterial vorbeifließt.

Dafür weisen diese Arten von Portionskapseln im Bereich ihres Flansches ein Dichtelement auf, welches in der Brühkammer gegen ein Brühkammerelement abdichtet. Hierbei ist es wünschenswert, dass das Dichtelement aus dem gleichen Material wie der Kapselkörper (auch als Basiselement bezeichnet) besteht, um die Fertigungskosten für die Portionskapsel gering zu halten und die Entsorgung bzw. Wiederverwertung bereits verwendeter Portionskapseln zu begünstigen.

In Figur 4H der Druckschrift WO 2016 / 186 488 A1 wird eine eingeprägte Dichtsicke als Dichtelement im Flanschbereich der Portionskapsel offenbart, die eine senkrechte äußere Flanke und eine geneigte innere Flanke aufweist. Das Ziel dieser Anmeldung besteht darin, die Dichtwirkung zu verbessern. Der Kerngedanke besteht hierbei darin, eine möglichst leicht deformierbare Dichtsicke zu verwenden, welche beim Schließen der Brühkammer unter dem Druck des Brühkammerelements plastisch deformiert wird und sich somit an die Kontur des Brühkammerelements zur Verbesserung der Dichtwirkung anschmiegt. Um diese Deformation zu begünstigen, soll die innere Flanke einen Winkel von 20 bis 60 Grad und vorzugsweise von 30 bis 50 Grad gegenüber der Flanschebene aufweisen. Die innere Flanke verläuft also relativ flach, um eine leichte Deformierbarkeit zu gewährleisten.

Eine ähnliche Portionskapsel ist aus der Druckschrift WO 2016 / 041 596 A1 bekannt. Auch hier weist die Portionskapsel in ihrem Flansch eine eingeprägte Dichtsicke auf. Auch hier soll die Dichtwirkung zwischen der Dichtsicke und dem Brühkammerelement durch eine einfache Deformation der Dichtsicke erzielt werden, weswegen die innere Flanke der Dichtsicke wiederum einen möglichst flachen Winkel aufweisen soll, der besonders bevorzugt weniger als 50 Grad zur Flanschebene aufweist.

Eine weitere Portionskapsel mit einem umlaufenden Dichtelement kennt der Fachmann aus der Druckschrift EP 2 872 421 A1. Bei dieser Lösung sollen beide Flanken des Dichtelements einen Winkel aufweist, wobei die innere Flanke erneut einen möglichst flachen Winkel zwischen 40 und 80 Grad zur Flanschebene aufweisen soll. Es wird sogar explizit offenbart, dass ab einem Winkel von 80 Grad die Flanke "zu vertikal" werden würde, um noch eine Abdichtung zwischen Brühkammerelement und Flansch erreichen zu können, weil auch dieses Dichtelement darauf basiert, dass es durch das Brühkammerelement deformiert wird (um 20 bis 30 %).

Ähnliche Portionskapseln sind aus den Druckschriften WO 2014 / 184 653 A1, WO 2018 / 185 058 A1 und WO 2018 / 067 009 A1 bekannt.

Die vorgenannten Portionskapseln haben allesamt gemein, dass die Dichtwirkung ihrer Dichtelemente jeweils auf einer starken Deformation ihrer selbst basieren. Hierfür werden innere Flanken mit einem möglichst flachen Winkel verwendet, damit das Brühkammerelement beim Schlie-βen der Brühkammer auf die Flanke einwirken kann und somit zu einer leichten Deformation des Dichtelements führt.

Nachteilig an einer Dichtlösung, die auf einer Deformation des Dichtelements basiert ist, dass hierdurch deutlich erhöhte Kräfte zum Schließen der Brühkammer notwendig sind. Der Bedienkomfort und die Langlebigkeit der Getränkezubereitungsmaschine werden somit erheblich erhöht.

Zudem sind die aus dem Stand der Technik bekannten Dichtelemente asymmetrisch ausgebildet. Bei einer Deformation kippen diese Dichtelemente daher seitlich weg. Hierdurch wird zwar eine erhöhte Dichtwirkung erzielt, jedoch besteht durch das seitliche Verkippen der Dichtelemente regelmäßig das Problem, dass das Brühkammerelement vom Dichtelement derart eingeklemmt wird, dass sich die Portionskapsel nach dem Brühvorgang nicht mehr ohne erhöhten Kraftaufwand vom Brühkammerelement trennen lässt. Das Auswerfen der verwendeten Portionskapsel aus der Brühkammer wird somit erheblich erschwert und beeinträchtigt maßgeblich den Bedienkomfort.

Eine Alternative wären separate Dichtelemente aus einem Dichtmaterial, wie sie aus den Druckschriften EP 1 654 966 A1 und EP 1 839 543 A1 bekannt sind. Solche Dichtelemente haben aber den oben bereits genannten Nachteil, dass aufgrund der Verwendung separater Materialien einerseits die Fertigungskosten für die Portionskapseln deutlich höher sind und andererseits die Entsorgung bzw. Wiederverwertung bereits verwendeter Portionskapseln schwieriger ist, weil die unterschiedlichen Materialien voneinander getrennt werden müssen.

### Offenbarung der Erfindung

Es ist eine Aufgabe der vorliegenden Erfindung eine Portionskapsel eingangs genannter Art zur Verfügung zu stellen, welche die im Zusammenhang mit dem Stand der Technik skizzierten Probleme nicht aufweist. Insbesondere soll eine Portionskapsel bereitgestellt werden, die eine verbesserte Dichtwirkung zwischen Flansch und Brühkammerelement ermöglicht, ohne dass hierfür erhöhte Kräfte beim Schließen der Brühkammer oder beim Entfernen der gebrühten Portionskapsel notwendig sind oder separate Materialien zur Realisierung der Dichtwirkung notwendig werden.

Die Aufgabe der vorliegenden Erfindung wird gelöst mit einer Portionskapsel zur Zubereitung eines Getränks in einer Brühkammer einer Getränkeherstellungsmaschine, wobei die Portionskapsel ein Basiselement mit einem Hohlraum zum Aufnehmen eines Getränkerohmaterials und einen den Hohlraum verschließenden Kapseldeckel aufweist, wobei das Basiselement einen Kapselboden, einen umlaufenden Flansch und eine sich zwischen dem Kapselboden und dem umlaufenden Flansch erstreckende Kapselwandung umfasst, wobei der Kapseldeckel an einer Siegelebene am Flansch befestigt ist, wobei der Flansch an seinem äußeren freien Ende einen umlaufenden Wulst aufweist, wobei an dem Flansch ein Dichtelement in Form einer vom Kapseldeckel weg weisenden Dichtsicke vorgesehen ist, wobei sich auf der Seite des Kapseldeckels zwischen dem Wulst und der Dichtsicke die Siegelebene auf dem Flansch erstreckt, wobei die Dichtsicke eine innere Flanke auf Seiten der Kapselwandung und eine äußere Flanke auf Seiten des Wulsts umfasst, wobei sowohl die äußere Flanke als auch die innere Flanke in einem Winkel von größer 80 bis kleiner 90 Grad zur Siegelebene ausgerichtet ist.

Die erfindungsgemäße Portionskapsel hat gegenüber dem Stand der Technik den Vorteil, dass der Winkel der inneren Flanke zwischen 80 und 90 Grad liegt. Der Winkel ist somit deutlich steiler als bei den aus dem Stand der Technik bekannten Winkeln. Dies führt dazu, dass sich die Dichtsicke beim Schließen der Brühkammer bzw. Aufbrühen der Portionskapsel weniger verformt und insbesondere die Dichtsicke steif genug ist, um die gewünschte Dichtwirkung durch einen starken Kontakt zwischen der inneren Flanke und dem Brühkammerelement herbeizuführen. Es war für den Fachmann überraschend und nicht zu erwarten, dass eine Abkehr von den aus dem Stand der Technik wohlbekannten Dichtelementen, die allesamt auf einer möglichst leichten Deformation des Dichtelements basieren, zu einer Dichtsicke, die sich aufgrund ihrer steilen Flanken weniger verformt und insbesondere steifer ist, das gewünschte Ergebnis von hoher Dichtigkeit erzielt. Zudem braucht es bei dieser Lösung keine hohen Schließkräfte, da keine Verformung herbeigeführt werden muss. Zudem ist die erfindungsgemäße Dichtsicke symmetrisch ausgebildet, da die innere Flanke und die äußere Flanke den gleichen Winkel zur Siegelebene einschließen, so dass eine extreme seitliche Verkippung der Dichtsicke verhindert wird. Auf diese Weise kann sichergestellt werden, dass sich die Portionskapsel auch trotz einer etwaigen gewissen Deformation des Dichtelements leicht und ohne erhöhten Kraftaufwand aus der Brühkammer wieder entfernen lässt. Die innere Flanke und äußere Flanke weisen erfindungsgemäß einen Winkel von 81 bis 89 Grad, bevorzugt 83 bis 87 Grad, besonders bevorzugt von 84 bis 86 Grad und ganz besonders bevorzugt von im Wesentlichen 85 Grad zur Siegelebene auf. Es hat sich gezeigt, dass in diesem Winkelbereich einerseits die Deformation der Dichtsicke verringert und die Steifigkeit der Dichtsicke erhöht werden kann, weil der Winkel möglichst steil ist und die Dichtsicke somit eine hohe Stabilität gegenüber senkrecht zur Siegelebene (auch als Vertikalrichtung Y bezeichnet) auf die Dichtsicke einwirkenden Kräften gewährleistet und andererseits eine einfache und kostengünstige Herstellung der Portionskapsel ermöglicht wird, weil der Winkel stets kleiner als ein rechter Winkel ist. Bei einem rechten Winkel an beiden Flanken der Dichtsicke, der inneren Flanke und der äußeren Flanke, wäre die Entformung der Portionskapsel aus dem Form- bzw. Prägewerkzeug bei der Herstellung der Portionskapsel deutlich schwieriger.

Vorteilhafte Ausgestaltungen und Weiterbildungen der Erfindung sind den Unteransprüchen, sowie der folgenden Beschreibung unter Bezugnahme auf die Zeichnungen entnehmbar. Diese vorteilhaften Ausgestaltungen und Weiterbildungen beziehen sich damit gleichermaßen auf beide vorstehend beschriebenen erfindungsgemäßen Portionskapseln.

Gemäß einer bevorzugten Ausführungsform der vorliegenden Erfindung ist vorgesehen, dass die Dichtsicke derart ausgebildet ist, dass sie beim Schließen der Brühkammer nur um maximal 30 %, bevorzugt um maximal 20 %, besonders bevorzugt um maximal 10 % und ganz besonders bevorzugt um maximal 5 % ihrer Gesamthöhe senkrecht zur Siegelebene deformiert wird. Insbesondere ist die Dichtsicke derart ausgebildet, dass sie bei einer senkrecht zur Siegelebene auf die Dichtsicke wirkenden Kraftbeaufschlagung von bis zu 100 N nur um maximal 30 %, bevorzugt um maximal 20 %, besonders bevorzugt um maximal 10 % und ganz besonders bevorzugt um maximal 5 % ihrer Höhe senkrecht zur Siegelebene deformiert wird.

Gemäß einer bevorzugten Ausführungsform der vorliegenden Erfindung ist vorgesehen, dass die Dichtsicke derart ausgebildet ist, dass sie beim Schließen der Brühkammer nur soweit parallel zur Siegelebene deformiert wird, dass sich ihr Radius zu einer zentralen Längsachse (um welche der Flansch rotationssymmetrisch angeordnet ist) der Portionskapsel nur um maximal 10 %, bevorzugt um maximal 8 %, besonders bevorzugt um maximal 5 % und ganz besonders bevorzugt um maximal 4 % parallel zur Siegelebene verschiebt. Vorteilhafterweise wird hierdurch ein Einklemmen des Brühkammerelements durch die seitlich verkippende Dichtsicke verhindert, so dass die gebrühte Portionskapsel stets einfach und ohne erhöhten Kraftaufwand aus der Brühkammer wieder entfernt werden kann.

Bei der vorliegenden Erfindung ist die Dichtsicke also derart steif und stabil ausgebildet, dass bei einer senkrecht zur Siegelebene, also entlang der Vertikalrichtung, zentral auf die Dichtsicke wirkenden Kraftbeaufschlagung mit einer Kraft von insbesondere bis zu 100 N, die insbesondere plan auf die Spitze der Dichtsicke oder auf einen Flankenbereich der Dichtsicke oder auf eine plane Übergangsebene der Dichtsicke wirkt, eine reduzierte Deformation der Dichtsicke stattfindet. Die Dichtsicke soll dabei in ihrer Höhe insbesondere maximal 30 %, bevorzugt um maximal 20 %, besonders bevorzugt um maximal 10 % und ganz besonders bevorzugt um maximal 5 % verändert werden können. Weiterhin ist denkbar, dass nur eine reduzierte seitliche Verschiebung bzw. Verformung entlang einer zur Siegelebene parallelen Richtung, also in radialer Richtung R von der Mittellängsachse der konzentrisch ausgebildeten Portionskapsel aus betrachtet, erfolgt. Auch hier ist vorgesehen, dass sich die Spitze der Dichtsicke, also der Übergangsbereich der Dichtsicke, um maximal 10 %, bevorzugt um maximal 8 %, besonders bevorzugt um maximal 5 % und ganz besonders bevorzugt um maximal 4 % ihres Gesamtradius von der zentralen Längsachse der Portionskapsel aus verschiebt oder deformiert. Als Gesamtradius kann hier beispielsweise der Radius von der Dichtsickenmitte aus betrachtet werden.

Vorzugsweise ist vorgesehen, dass der Winkel zwischen der inneren und äußeren Flanke bevorzugt 5 bis 15 Grad, besonders bevorzugt 8 bis 12 Grad und ganz besonders bevorzugt im Wesentlichen 10 Grad beträgt.

Gemäß der vorliegenden Erfindung ist vorgesehen, dass sich zwischen der inneren Flanke und der äußeren Flanke ein Übergangsbereich erstreckt, wobei der Übergangsbereich eine sich parallel zur Siegelebene erstreckende Übergangsebene aufweist. Die gekrümmte Ausbildung des Übergangsbereichs hat den Vorteil, dass die Dichtsicke an Stabilität gewinnt und somit eine Verformung noch wirksamer verhindert werden kann. Hingegen hat die ebene Ausbildung der Übergangsbereichs den Vorteil, dass die Dichtsicke flacher ist und dadurch weniger weit in die Vertiefung der Dichtkontur des Aufnahmeelements der Brühkammer eingreift, so dass beim Schließen der Brühkammer weniger Kraft auf die Dichtsicke ausgeübt wird. Zudem ist die Gefahr des Einklemmens des Brühkammerteils bei der flachen Dichtsicke geringer.

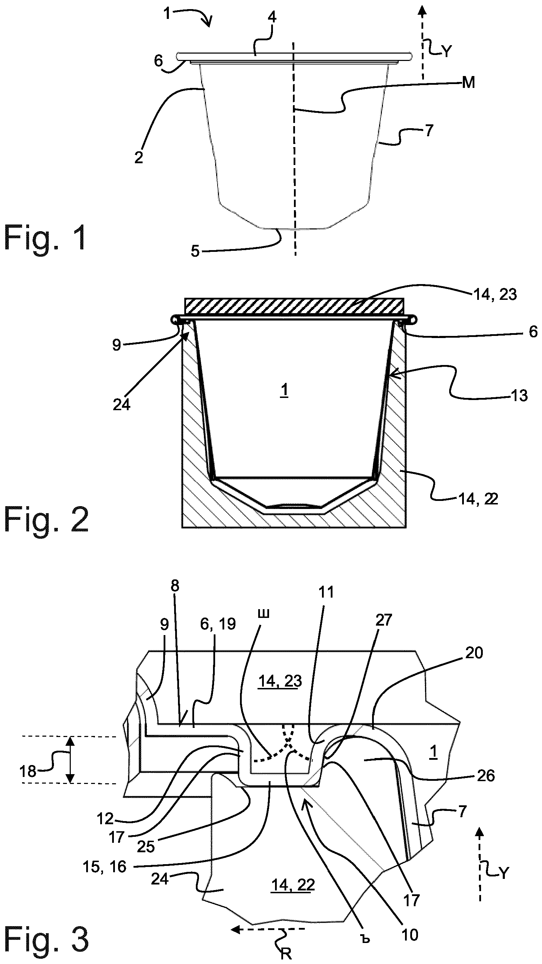

Vorzugsweise weist im radialen Querschnitt der umlaufenden Dichtsicke sowohl die innere Flanke als auch die äußere Flanke jeweils einen geradlinigen Kontaktbereich aufweist, der sich zwischen dem Flansch und dem Übergangsbereich erstreckt. Die Begrifflichkeit "im radialen Querschnitt" bedeutet, dass man auf eine Schnittbilddarstellung der Flanschkontur entlang der Umfangsrichtung der umlaufenden Flanschkontur schaut. Die Ebene der Schnittbilddarstellung wird demnach durch die Vertikalrichtung und die radiale Richtung aufgespannt, so wie in den Figuren 3 bis 5 illustriert.

Gemäß einer bevorzugten Ausführungsform der vorliegenden Erfindung ist vorgesehen, dass der geradlinige Kontaktbereich eine Länge von 0,1 bis 1,5 Millimeter, bevorzugt von 0,3 bis 1,3 Millimeter, besonders bevorzugt von 0,5 bis 1,0 Millimeter und ganz besonders bevorzugt von 0,7 bis 0,9 Millimeter aufweist. Es hat sich in Simulationen und Experimenten gezeigt, dass bei einem geradlinigen Kontaktbereich der genannten Längen eine optimale Dichtung zwischen der Dichtkontur des Brühkammerelements und dem Flansch erzielt werden kann. Mit anderen Worten: Ein form- und kraftschlüssiges planes Anliegen der inneren Flanke mit einer Dichtnasenflanke der Dichtkontur des Brühkammerelements über eine Länge von 0,1 bis 1,5 Millimeter, bevorzugt von 0,3 bis 1,3 Millimeter, besonders bevorzugt von 0,5 bis 1,0 Millimeter und ganz besonders bevorzugt von 0,7 bis 0,9 Millimeter reicht aus, um eine ausreichende Dichtwirkung zu erzielen (im Bereich der inneren Flanke), ohne dass eine starke Deformation der Dichtsicke durch die Dichtkontur notwendig ist.

Gemäß einer bevorzugten Ausführungsform der vorliegenden Erfindung ist vorgesehen, dass die Portionskapsel im Übergang vom geradlinigen Kontaktbereich zum Übergangsbereich auf der zum Kapseldeckel 4 zugewandten Seite einen Radius von 0,05 bis 0,2 Millimeter, bevorzugt von 0,09 bis 0,13 Millimeter und besonders bevorzugt von 0,11 aufweist. Gemäß einer bevorzugten Ausführungsform der vorliegenden Erfindung ist vorgesehen, dass die Portionskapsel im Übergang von der äußeren Flanke zum Übergangsbereich auf der zum Kapseldeckel zugewandten Seite einen Radius von 0,05 bis 0,2 Millimeter, bevorzugt von 0,09 bis 0,13 Millimeter und besonders bevorzugt von 0,11 aufweist. Gemäß einer bevorzugten Ausführungsform der vorliegenden Erfindung ist vorgesehen, dass die Höhe der Dichtsicke senkrecht zur Siegelebene zwischen 0,6 und 1,3 Millimeter, bevorzugt zwischen 0,3 und 0,6 Millimeter und besonders bevorzugt zwischen 0,9 und 1,0 Millimeter umfasst. Die vorstehend beschriebene bevorzugte Bemaßung der Dichtsicke führt dazu, dass die Dichtsicke eine ausreichende Stabilität aufweist, damit keine starke Deformation derselben während des Schließens der Brühkammer und/oder dem Aufbrühen der Kapsel in der Brühkammer erfolgt.

Gemäß einer bevorzugten Ausführungsform der vorliegenden Erfindung ist vorgesehen, dass die Dichtsicke eine mittlere Materialstärke zwischen 0,05 und 0,3 Millimeter, bevorzugt zwischen 0,08 und 1,8 Millimeter, besonders bevorzugt zwischen 0,09 und 1,5 Millimeter und ganz besonders bevorzugt von im Wesentlichen 0,11 Millimetern umfasst. Gemäß einer bevorzugten Ausführungsform der vorliegenden Erfindung ist vorgesehen, dass im radialen Querschnitt der umlaufenden Dichtsicke der Übergangsbereich einen geradlinigen Verbindungsbereich aufweist, welcher eine Breite von zwischen 0,1 bis 0,4 Millimeter, bevorzugt zwischen 0,15 bis 0,35 Millimeter und besonders bevorzugt zwischen 0,2 und 0,3 Millimeter aufweist. Gemäß einer bevorzugten Ausführungsform der vorliegenden Erfindung ist vorgesehen, dass die Portionskapsel im Übergang von der äußeren Flanke zum parallel zur Siegelebene verlaufenden Flanschbereich einen Radius von 0,1 bis 0,3 Millimeter, bevorzugt von 0,18 bis 0,24 Millimeter und besonders bevorzugt von 0,20 bis 0,22 aufweist. Die vorstehend beschriebene bevorzugte Bemaßung der Dichtsicke führt dazu, dass die Dichtsicke eine ausreichende Stabilität aufweist, damit keine Deformation derselben während des Schließens der Brühkammer und/oder dem Aufbrühen der Kapsel in der Brühkammer erfolgt.

Gemäß einer bevorzugten Ausführungsform der vorliegenden Erfindung ist vorgesehen, dass die Portionskapsel einen sich parallel zur Siegelebene erstreckenden Flanschbereich zwischen dem Wulst und der äußeren Flanke aufweist und wobei die Portionskapsel einen sich zwischen der inneren Flanke und der Kapselwandung erstreckenden Flanschzwischenbereich aufweist, wobei der Flanschbereich und der Flanschzwischenbereich entlang einer zur Siegelebene senkrechten Vertikalrichtung auf gleicher Höhe liegen. Dies hat den Vorteil, dass es beim Schließen der Brühkammer nicht zu einer indirekten Verlagerung oder Verformung der Dichtsicke kommt, indem sich der Flanschzwischenbereich oder der Flanschbereich relativ zueinander in Vertikalrichtung verformen oder verlagern. Stattdessen können sich sowohl der Flanschzwischenbereich als auch der Flanschbereich am Verschlusselement der Brühkammer abstützen und so eine geeignete Gegenkraft zur Vermeidung einer nennenswerten Deformation der Dichtsicke aufbauen. Denkbar ist, dass die Deckelfolie sowohl am Flanschzwischenbereich als auch im Flanschbereich jeweils an den Flansch gesiegelt oder geklebt ist.

Gemäß einer bevorzugten Ausführungsform der vorliegenden Erfindung ist vorgesehen, dass die Portionskapsel im Übergang von der inneren Flanke zu einem sich zwischen der Dichtsicke und der Kapselwandung erstreckenden Flanschzwischenbereich einen Radius von 0,2 bis 0,35 Millimeter, bevorzugt von 0,26 bis 0,30 Millimeter und besonders bevorzugt von im Wesentlichen 0,28 aufweist.

Gemäß einer bevorzugten Ausführungsform der vorliegenden Erfindung ist vorgesehen, dass im radialen Querschnitt der Dichtsicke die äußere Flanke einen geradlinigen Flankenabschnitt aufweist, der eine Länge zwischen 0,01 und 0,15 Millimeter, bevorzugt zwischen 0,06 und 0,10 Millimeter und besonders bevorzugt 0,08 Millimeter umfasst. Gemäß einer bevorzugten Ausführungsform der vorliegenden Erfindung ist vorgesehen, dass im radialen Querschnitt die Erstreckung der Siegelebene zwischen der äußeren Flanke und dem Wulst eine Länge zwischen 0,2 und 0,8 Millimeter, bevorzugt zwischen 0,3 und 0,7 Millimeter und besonders bevorzugt zwischen 0,4 und 0,6 Millimeter umfasst.

Gemäß einer bevorzugten Ausführungsform der vorliegenden Erfindung ist vorgesehen, dass der Wulst über eine die Siegelebene bildende Oberseite über den Flansch vorsteht. Vorzugsweise steht der Wulst über eine der Siegelebene abgewandten Unterseite vom Flansch vor, wobei der Wulst auf der Unterseite weniger als die Dichtsicke vom Flansch absteht und/oder wobei der Wulst auf der Oberseite weniger als auf der Unterseite über den Flansch vorsteht. Der Wulst ist insbesondere durch ein Einrollen des Flanschrandes gebildet, wobei vorzugsweise der Flanschrand in Richtung Kapselboden eingerollt ist.

Gemäß einer bevorzugten Ausführungsform der vorliegenden Erfindung ist vorgesehen, dass das Basiselement einstückig aus Aluminium gefertigt ist. Vorzugsweise wird das Basiselement durch Kalt- oder Warmverformung, insbesondere Tiefziehen hergestellt, bei welchem die Dichtsicke integral in den Flansch eingeprägt wird. Die Portionskapsel ist bevorzugt kegelstumpfförmig oder zylinderförmig ausgeführt. Der durch das Basiselement gebildete Hohlraum dient der Aufnahme von Getränkerohmaterial, beispielsweise Kaffeeröstgranulat, Instantkaffee, Schokoladenpulver, Teeverschnitt, Milchpulver und/oder dergleichen.

Vorzugsweise weist die Portionskapsel auf ihrer Kapselwandung eine oder mehrere, vorzugsweise 6, konzentrisch umlaufende Rillen zur Versteifung der Kapselwandung auf. Die Rillen können dabei als nach innen oder nach außen gewandten Vertiefungen und/oder Erhebungen ausgebildet sein.

Ein weiterer Gegenstand der vorliegenden Erfindung ist ein System zur Zubereitung eines Getränks aufweisend eine Getränkeherstellungsmaschine und die erfindungsgemäße Portionskapsel, wobei die Getränkeherstellungsmaschine eine Brüheinheit mit einem ersten Brühkammerteil und einem zweiten Brühkammerteil aufweist, wobei das erste und/oder das zweite Brühkammerteil relativ zum anderen Brühkammerteil zwischen einer angenäherten Position, in welcher das erste und das zweite Brühkammerteil eine geschlossene Brühkammer bilden, und einer offenen Position, in welcher das erste und das zweite Brühkammerteil zum Einsetzen oder Auswerfen einer Portionskapsel voneinander beabstandet sind, bewegbar ist, wobei das erste Brühkammerteil ein Aufnahmeelement zur teilweisen Aufnahme der Portionskapsel und das zweite Brühkammerteil ein Verschlusselement für das Aufnahmeelement umfasst, wobei in der geschlossenen Position der Flansch der Portionskapsel zwischen einem Randbereich des Aufnahmeelements und dem Verschlusselement formschlüssig und dichtend aufgenommen ist.

Die erfindungsgemäße Portionskapsel ist Teil des erfindungsgemäßen Systems, weswegen alle im Zusammenhang mit der Portionskapsel erläuterten Vorteil und Weiterbildungen gleichermaßen auch für das erfindungsgemäße System gelten.

Gemäß einer bevorzugten Ausführungsform der vorliegenden Erfindung ist vorgesehen, dass das im Randbereich eine Dichtkontur zum dichtenden Eingriff mit der Dichtsicke ausgebildet ist, wobei die Dichtkontur eine umlaufende Vertiefung und eine benachbart zur Vertiefung ausgebildete umlaufende Dichtnase umfasst, wobei vorzugsweise die Vertiefung in radialer Richtung außerhalb der Dichtnase angeordnet ist und wobei eine äußere Dichtnasenflanke eine innere Wandung der Vertiefung bildet. Insbesondere greifen in der geschlossenen Position die Dichtnase in den Flanschzwischenbereich und die Dichtsicke in die Vertiefung derart ein, dass die Dichtnasenflanke mit der inneren Flanke in radialem Querschnitt einen Linienkontakt ausbilden.

Gemäß einer bevorzugten Ausführungsform der vorliegenden Erfindung ist vorgesehen, dass in der geschlossenen Position die Dichtsicke durch die Dichtkontur nur um maximal 30 %, bevorzugt um maximal 20 %, besonders bevorzugt um maximal 10 % und ganz besonders bevorzugt um maximal 5 % ihrer Höhe senkrecht zur Siegelebene deformiert wird.

Gemäß einer bevorzugten Ausführungsform der vorliegenden Erfindung ist vorgesehen, dass die Dichtkontur eine weitere umlaufende Dichtnase aufweist, wobei die Vertiefung in radialer Richtung zwischen der Dichtnase und der weiteren Dichtnase angeordnet ist, wobei die Dichtnase länger als die weitere Dichtnase ausgebildet ist und wobei in der geschlossenen Position die weitere Dichtnase mit der äußeren Flanke im radialen Querschnitt einen Punktkontakt ausbildet.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figuren 1 und 2**: zeigen schematische Schnittbildansichten einer Portionskapsel und eines Systems zur Zubereitung eines Getränks gemäß einer beispielhaften ersten Ausführungsform der vorliegenden Erfindung.
- **Figuren 3 und 4**: zeigen schematische Detailansichten der Portionskapsel gemäß der beispielhaften ersten Ausführungsform der vorliegenden Erfindung.
- **Figur 5**: zeigt eine schematische Detailansichten der Portionskapsel gemäß einer nicht erfindungsgemäßen Ausführungsform.

### Ausführungsformen der Erfindung

In **Figuren 1 und 2** sind eine schematische Seitenansicht einer Portionskapsel 1 und ein Schnittbildansicht eines Systems aus der Portionskapsel 1 und einem Teil einer Getränkeherstellungsmaschine 14 zur Zubereitung eines Getränks gemäß einer beispielhaften ersten Ausführungsform der vorliegenden Erfindung dargestellt.

Die Portionskapsel 1 weist ein beispielhaft becherförmig und kegelstumpfförmig ausgebildetes Basiselement 2 auf, welches an seiner geschlossenen Seite einen Kapselboden 5 und an seiner offenen Seite einen umlaufenden Flansch 6 aufweist. Zwischen dem Kapselboden 5 und dem Flansch 6 erstreckt sich eine Kapselwandung 7 um einen Hohlraum 3. Die Portionskapsel 1 ist um ihre zentrale Mittellängsachse M, die eine Vertikalrichtung Y definiert, rotationssymmetrisch aufgebaut. In radialer Richtung R steht der Flansch 6, der kreisförmig und somit in Umfangsrichtung umlaufend ausgebildet ist, nach außen über die Kapselwandung 7 vor.

Der Flansch 6 ist mit einem Kapseldeckel 4 in Form einer Deckelfolie fest verbunden, welche den Hohlraum 3 auf der offenen Seite des Basiselements 2 verschließt. Der Flansch 6 weist hierfür eine dem Kapseldeckel 4 zugewandte Siegelebene 8 auf, welche sich ungefähr rechtwinklig zur Vertikalrichtung Y erstreckt. Der Kapseldeckel 4 ist in seinem Randbereich auf die Siegelebene 8 gesiegelt, geschweißt oder geklebt.

Der Kapseldeckel 4 ist bevorzugt aus Aluminium oder Kunststoff, ausgeführt. Innerhalb des Basiselements 2 ist der Hohlraum 3 ausgebildet, welcher mit Getränkerohmaterial, beispielsweise Kaffeeröstgranulat, Instantkaffee, Schokoladenpulver, Teeverschnitt, Milchpulver und/oder dergleichen befüllt ist (aus Gründen der Übersichtlichkeit nicht illustriert) und welcher durch den Kapseldeckel 4 verschlossen ist.

Die becherförmige Ausgestaltung des Basiselements 2 wird vorzugsweise durch Thermoformen, beispielsweise Tiefziehen mittels Unterdrucks, Überdrucks und/oder einem beweglichen Stempel, erzeugt. Das Basiselement 2 ist vorzugsweise als tiefgezogenes Aluminiumteil ausgebildet. Alternativ wäre aber auch denkbar, dass das Kunststoffteil aus Polyethylen (PE), Polypropylen (PP), Polyvinylchlorid (PVC) oder Polyethylenterephthalat (PET) ausgebildet ist. Alternativ wird die Portionskapsel 1 mittels Spritzgussverfahren, insbesondere im Einkomponenten-, Mehrkomponenten- oder In-Mold-Verfahren, hergestellt.

Die Portionskapsel 1 wird im Gebrauch in einer Getränkeherstellungsmaschine 14 in eine Brüheinheit eingeführt. Die Brüheinheit umfasst ein erstens Brühkammerteil und ein zweites Brühkammerteil, wobei das erste oder das zweite Brühkammerteil relativ zum anderen Brühkammerteil zwischen einer angenäherten Position, in welcher das erste und das zweite Brühkammerteil eine geschlossene Brühkammer 13 bilden, und einer offenen Position, in welcher das erste und das zweite Brühkammerteil zum Einsetzen oder Auswerfen der Portionskapsel 1 voneinander beabstandet sind, bewegbar ist.

Das erste Brühkammerteil ist als becherförmiges Aufnahmeelement 22 ausgebildet, welches die Portionskapsel 1 größtenteils aufnimmt, insbesondere wenn die Brühkammer 13 in der geschlossenen Position befindlich ist. Das zweite Brühkammerteil ist als Verschlusselement 23 für das Aufnahmeelement 22 ausgebildet. In der in Figur 2 abgebildeten geschlossenen Position ist der Flansch 6 der Portionskapsel 1 zwischen einem Randbereich 24 des Aufnahmeelements 22 und dem Verschlusselement 23 dichtend eingeklemmt.

In dieser geschlossenen Position werden der Kapseldeckel 4 und der Kapselboden 5 nacheinander oder gleichzeitig perforiert. Die eine oder mehrere Perforationsöffnungen im Kapselboden 5 werden dabei insbesondere durch eine oder mehrere Perforationsspitzen am Verschlusselement 23 während des Schließens der Brühkammer 13 gebildet, während die Perforationsöffnungen im Kapseldeckel 4 vorzugsweise durch Perforationsstrukturen im Boden des Aufnahmeelements schon während des Schließens der Brühkammer 13 oder erst durch den Druckaufbau im Inneren der Portionskapsel 1 während des Getränkeherstellungsprozesses erzeugt werden.

Durch die eine oder mehrere Perforationsöffnungen im Kapselboden 5 wird Extraktionsflüssigkeit unter Druck in den Hohlraum 3 eingeleitet. Durch die Wechselwirkung zwischen der Extraktionsflüssigkeit und dem Getränkerohmaterial entsteht das gewünschte Getränk, welches die Portionskapsel 1 durch die Perforationsöffnungen im Kapseldeckel 4 verlässt und einem Getränkegefäß zugeführt wird. Durch ein optionales Filtermedium können etwaige Partikel des Getränkerohmaterials aus dem Getränk gefiltert und in der Portionskapsel 1 zurückgehalten werden. Vorzugsweise fungiert aber der mehrfach perforierte Kapseldeckel 4 als Filterelement.

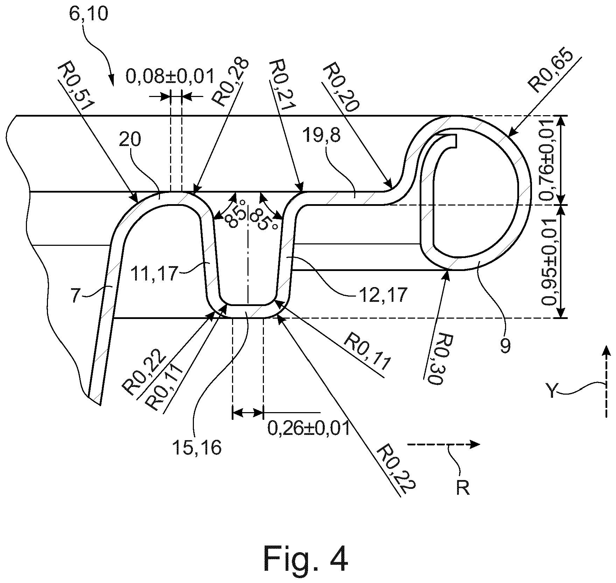

In **Figuren 3** **und** **4** sind eine Detailansicht der in Figur 2 illustrierten Portionskapsel 1 und Brühkammer 13 gemäß der beispielhaften ersten Ausführungsform der vorliegenden Erfindung dargestellt. Die Figuren 3 und 4 zeigen dabei die Schnittdarstellung des Flansches 6 auf der linken Seite von Figur 2 in einer vergrößerten Illustration. Die Figur 3 ist weder maßstabsgetreu noch sind die Winkel richtig wiedergegeben. Es handelt sich hier lediglich um eine Prinzipskizze, aus der keinerlei Winkel- oder Längsverhältnisse entnommen werden können. Die Figur 3 soll lediglich die grundsätzliche Anordnung der einzelnen Bereiche sowie der Bezugszeichen verdeutlichen. In Figur 4 ist der in Figur 3 gezeigte Bereich maßstabsgetreuer und mit korrekterer Wiedergabe der Winkel- und Längsverhältnisse illustriert. Die Maße und Winkel der in Figur 3 gezeigten Ausführungsform können also der Figur 4 entnommen werden.

Der abgebildete Flansch 6 erstreckt sich im Wesentlichen horizontal, also parallel zur radialen Richtung R, von dem oberen Ende der Kapselwandung 7 bis zu seinem freien äußeren Ende, an welchem der Flansch 6 mit einem Wulst 9 abschließt. Der Wulst 9 umfasst insbesondere ein in Richtung des Kapselbodens 5 aufgerolltes Flanschende

Zudem steht der Wulst 9 in Vertikalrichtung Y insbesondere sowohl über eine die Siegelebene 8 bildende Oberseite vom den Flansch 6 als auch über eine der Siegelebene 8 abgewandten Unterseite vom Flansch 6 jeweils vor, wobei der Flansch 6 auf der Unterseite weniger als eine Dichtsicke 10 vom Flansch 6 absteht und ferner auf der Oberseite weniger oder identisch wie auf der Unterseite über den Flansch 6 vorsteht.

Zwischen dem Wulst 9 und dem Ende der Kapselwandung 7 weist der Flansch 6 die Dichtsicke 10 auf, welche in Form eine in Vertikalrichtung Y vom Kapseldeckel 4 weg gerichteten und konzentrisch in Umfangsrichtung um die Mittellängsachse M umlaufende Einprägung ausgebildet ist. Die Dichtsicke 10 weist dabei eine der Kapselwandung 7 zugewandte innere Flanke 11 und eine dem Wulst 9 zugewandte äußere Flanke 12 auf.

Zwischen der inneren Flanke 11 und der äußeren Flanke 12 erstreckt sich ein planer Übergangsbereich 15 in Form der Übergangsebene 16, die insbesondere flach (also geradlinig) und parallel zur Siegelebene 8 verläuft. Zwischen der äußeren Flanke 12 und dem Wulst 9 weist der Flansch 6 einen Flanschbereich 19, dessen Oberseite die Siegelebene 8 bildet, auf. Die äußere Flanke 12 verläuft zur Siegelebene 8 und somit zur Ebene des Flanschbereichs 19 in einem Winkel α von ca. 85 Grad.

Die äußere Flanke 12 hat insbesondere einen geradlinigen Flankenabschnitt 21, der vorzugsweise eine Länge zwischen 0,5 und 0,9 Millimeter umfasst. Der Flanschbereich 19 hat vorzugsweise eine Länge von 0,2 bis 0,8 Millimeter. Der Übergang zwischen Flanschbereich 19 und äußerer Flanke 12 weist auf der Oberseite des Flansches 6 vorzugsweise einen Radius von 0,20 bis 0,21 Millimeter auf, während der Übergang von der äußeren Flanke 12 zur Übergangsebene 16 sowie zur Übergangsebene 16 zur inneren Flanke 11 auf der Oberseite des Flansches 6 jeweils einen Radius von 0,1 bis 0,12 aufweisen.

Zwischen der inneren Flanke 11 und dem oberen Ende der Kapselwandung 7 weist der Flansch 6 einen Flanschzwischenbereich 20 auf. Der Flanschzwischenbereich ist im vorliegenden Beispiel im radialen Querschnitt zumindest abschnittsweise geradlinig ausgebildet. Der geradlinige Bereich hat insbesondere eine Länge von 0,07 bis 0,09 Millimeter.

Die innere Flanke 11 weist im radialen Querschnitt einen geradlinigen Kontaktbereich 17 auf, d.h. der geradlinige Kontaktbereich ist die Länge der Gerade zwischen den zwei Wendepunkten im Verlauf der inneren Flanke 11. Die Länge des Kontaktbereichs 17 beträgt im vorliegenden Beispiel bevorzugt 0,5 bis 0,9 Millimeter.

Erfindungsgemäß beträgt der Winkel β zwischen der inneren Flanke 11 bzw. dem geradlinigen Kontaktbereich 17 und der Siegelebene 8 im Wesentlichen 85 Grad zur Siegelebene 8.

Der Winkel zwischen der inneren und äußeren Flanke 11, 12 beträgt somit bevorzugt 5 bis 15 Grad, besonders bevorzugt 8 bis 12 Grad und ganz besonders bevorzugt im Wesentlichen 10 Grad.

Der Flanschbereich 19 und der geradlinige Abschnitt des Flanschzwischenbereichs 20 liegen in Vertikalrichtung Y auf gleicher Höhe. Die Höhe 18 der Dichtsicke 10 entspricht der Gesamterstreckung der Dichtsicke 10 von der Unterseite des Flansch- und Flanschzwischenbereichs 19, 20 zur Unterseite des Flansches 6 im Bereich der Übergangsebene 16. Diese Höhe 18 beträgt senkrecht zur Siegelebene 8 zwischen 0,9 und 1,0 Millimeter.

Die Materialstärke des Aluminiums im Bereich des Flansches 6 beträgt vorzugsweise zwischen 0,1 und 0,13 Millimeter.

In Figur 3 ist ebenfalls der Randbereich 24 des Aufnahmeelements 22 dargestellt, welcher mit dem Flansch 6 der Portionskapsel 1 in dichtendem Eingriff steht. Der Randbereich 24 umfasst eine Dichtkontur zum dichtenden Eingriff mit der Dichtsicke 10 ausgebildet ist.

Die Dichtkontur weist hierfür eine in Umfangsrichtung umlaufende Vertiefung 25 und eine benachbart zur Vertiefung 25 ausgebildete in Umfangsrichtung ebenfalls umlaufende Dichtnase 26 auf. In radiale Richtung R betrachtet ist die Vertiefung 25 außerhalb der Dichtnase 26 angeordnet, so dass eine äußere Dichtnasenflanke 27 der Dichtnase 26 eine innere Wandung der Vertiefung 25 bildet.

In der abgebildeten geschlossenen Position greift die Dichtnase 26 in den Flanschzwischenbereich 20 ein, während die Dichtsicke 10 in die Vertiefung 25 eingreifen. Hierdurch bildet sich zwischen der Dichtnasenflanke 27 und der inneren Flanke 11 in radialem Querschnitt ein Kontakt 28 aus. Dieser Kontakt 28 ist in Umfangsrichtung vorzugsweise umlaufend vorhanden und bildet damit die eigentliche Abdichtung zwischen Flansch 6 und Aufnahmeelement 22, so dass keine oder kaum Extraktionsflüssigkeit an der Getränkesubstanz vorbei zum Auslass der Brühkammer 13 fließen kann.

Der Scheitelpunkt der Dichtnase 26 berührt optional die Unterseite der Krümmung des Flanschzwischenbereichs 20, während die Unterseite der Übergangsebene 16 optional den Boden der Vertiefung 25 berührt.

Die vorstehend beschriebene Ausbildung und Dimensionierung der Dichtsicke 10 führt dazu, dass sich die Dichtsicke 10 beim Schließen der Brühkammer 14 und/oder beim Aufbrühen des Getränks nicht erheblich deformiert. Die Abdichtung erfolgt hauptsächlich durch den insbesondere umlaufenden Kontakt 28, der aufgrund der Steifigkeit der Dichtsicke 10 relativ stark kraftbeaufschlagt ist.

Mit anderen Worten: Die Dichtsicke 10 ist derart ausgebildet, dass sie beim Schließen der Brühkammer 13 und/oder Aufbrühen der Portionskapsel 1 nur um maximal 30 %, bevorzugt um maximal 20 %, besonders bevorzugt um maximal 10 % und ganz besonders bevorzugt um maximal 5 % ihrer Höhe 18 senkrecht zur Siegelebene 8 deformiert wird. Insbesondere ist die Dichtsicke 10 somit derart ausgebildet ist, dass sie bei einer senkrecht zur Siegelebene 8 auf die Dichtsicke 10 wirkenden Kraftbeaufschlagung von bis zu 100 N nur um maximal 30 %, bevorzugt um maximal 20 %, besonders bevorzugt um maximal 10 % und ganz besonders bevorzugt um maximal 5 % ihrer Höhe 18 senkrecht zur Siegelebene 8 deformiert wird. Nur so steht ausreichend Kraft für den Kontakt 28 zur Verfügung.

Denkbar ist, dass die Dichtsicke 10 beim Schließen der Brühkammer 13 und/oder Aufbrühen der Portionskapsel 1 in ihrer Höhe 18 insbesondere um maximal 0,2 Millimeter, bevorzugt um maximal 0,15 Millimeter, besonders bevorzugt um maximal 0,1 Millimeter und ganz besonders bevorzugt um maximal 0,05 Millimeter in Vertikalrichtung Y verändert wird.

Vorzugsweise ist die Dichtsicke 10 dadurch ebenfalls derart steif ausgebildet, dass auch keine zu starke seitliche Verschiebung bzw. Verformung in radialer Richtung R erfolgt. Es ist vorgesehen, dass die Dichtsicke 10 derart ausgebildet ist, dass sie beim Schließen der Brühkammer 13 vorzugsweise nur soweit parallel zur Siegelebene 8 deformiert bzw. verschoben wird, dass sich ihr Radius bezogen auf eine zentrale Längsachse der Portionskapsel 1 nur um maximal 5 % parallel zur Siegelebene 8 verschiebt, damit die Portionskapsel 1 nach dem Brühen leicht wieder aus der Brühkammer entnommen werden kann und sich die Dichtnase 26 nicht mit der seitliche verkippenden Dichtsicke 10 verklemmt.

Denkbar ist, dass bei der Dichtsicke 10 beim Schließen der Brühkammer 13 und/oder Aufbrühen der Portionskapsel 1 vorzugsweise vorgesehen ist, dass sich die Spitze der Dichtsicke 10, also der Übergangsbereich 15 der Dichtsicke10, um maximal 0,2 Millimeter, bevorzugt um maximal 0,15 Millimeter, besonders bevorzugt um maximal 0,1 Millimeter und ganz besonders bevorzugt um maximal 0,05 Millimeter in radialer Richtung R verschiebt oder deformiert.

Die übrigen in der Figur 4 nummerisch aufgezeigten Maße können vorzugsweise ebenfalls als erfindungswesentlich betrachtet werden.

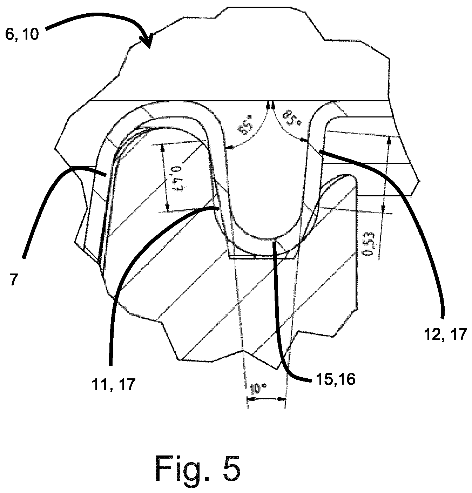

In **Figur 5** ist eine Detailansicht der in Figuren 3 und 4 illustrierten Portionskapsel 1 und Brühkammer 13 gemäß einer nicht erfindungsgemäßen Ausführungsform dargestellt. Die Figur 5 zeigt dabei die Schnittdarstellung der Dichtsicke 10 (in gleicher Ausrichtung wie bei Figur 4, also links die Kapselwandung 7 und rechts 7 der Wulst 9) in einer vergrößerten Illustration.

Die zweite Ausführungsform gleicht im Wesentlichen der in Figuren 3 und 4 illustrierten ersten Ausführungsform, so dass alle vorstehenden Erläuterungen analog gelten.

Im Unterschied ist der Übergangsbereich 15 allerdings als gekrümmter Übergangsbereich und nicht als geradliniger, abgeflachter Übergangsbereich 15 ausgebildet. Der geradlinige Kontaktbereich 17 weist auf der äußeren Flanke 12 eine Länge von 0,5 bis 0,6 Millimeter, insbesondere 0,53 Millimeter auf. Der geradlinige Kontaktbereich 17 weist auf der inneren äußeren Flanke 11 eine Länge von 0,4 bis 0,55 Millimeter, insbesondere 0,473 Millimeter auf.

Der Winkel zwischen der inneren und äußeren Flanke 11, 12 beträgt bevorzugt 5 bis 15 Grad, besonders bevorzugt 8 bis 12 Grad und ganz besonders bevorzugt im Wesentlichen 10 Grad.

### Bezugszeichenliste

- 1: Portionskapsel
- 2: Basiselement
- 3: Hohlraum
- 4: Kapseldeckel
- 5: Kapselboden
- 6: Flansch
- 7: Kapselwandung
- 8: Siegelebene
- 9: Wulst
- 10: Dichtsicke
- 11: Innere Flanke
- 12: Äußere Flanke
- 13: Brühkammer
- 14: Getränkeherstellungsmaschine
- 15: Übergangsbereich
- 16: Übergangsebene
- 17: Kontaktbereich
- 18: Höhe der Dichtsicke
- 19: Flanschbereich
- 20: Flanschzwischenbereich
- 21: Flankenabschnitt
- 22: Aufnahmeelement
- 23: Verschlusselement
- 24: Randbereich
- 25: Vertiefung
- 26: Dichtnase
- 27: Dichtnasenflanke
- 28: Weitere Dichtnase
- α: Winkel
- β: Winkel
- R: Radiale Richtung
- Y: Vertikalrichtung
- M: Mittellängsachse

## Patentansprüche

1. Portionskapsel (1) zur Zubereitung eines Getränks in einer Brühkammer (13) einer Getränkeherstellungsmaschine (14), wobei die Portionskapsel (1) ein Basiselement (2) mit einem Hohlraum (3) zum Aufnehmen eines Getränkerohmaterials und einen den Hohlraum (3) verschließenden Kapseldeckel (4) aufweist, wobei das Basiselement (2) einen Kapselboden (5), einen umlaufenden Flansch (6) und eine sich zwischen dem Kapselboden (5) und dem umlaufenden Flansch (6) erstreckende Kapselwandung (7) umfasst, wobei der Kapseldeckel (4) an einer Siegelebene (8) am Flansch (6) befestigt ist, wobei der Flansch (6) an seinem äußeren freien Ende einen umlaufenden Wulst (9) aufweist, wobei an dem Flansch (6) ein Dichtelement in Form einer vom Kapseldeckel (4) weg weisenden Dichtsicke (10) vorgesehen ist, wobei sich auf der Seite des Kapseldeckels (4) zwischen dem Wulst (9) und der Dichtsicke (10) die Siegelebene (8) auf dem Flansch (6) erstreckt, wobei die Dichtsicke (10) eine innere Flanke (11) auf Seiten der Kapselwandung (7) und eine äußere Flanke (12) auf Seiten des Wulsts (9) umfasst, **dadurch gekennzeichnet, dass** sowohl die äußere Flanke (12) als auch die innere Flanke (11) in einem Winkel (α, β) von 81 bis 89 Grad zur Siegelebene (8) ausgerichtet ist, wobei sich zwischen der inneren Flanke (11) und der äußeren Flanke (12) ein Übergangsbereich (15) erstreckt, wobei der Übergangsbereich (15) eine sich parallel zur Siegelebene (8) erstreckende Übergangsebene (16) aufweist.

2. Portionskasel nach Anspruch 1, wobei sowohl die innere Flanke (11) als auch die äußere Flanke (12) einen Winkel (α, β) von 83 bis 87 Grad, bevorzugt von 84 bis 86 Grad und besonders bevorzugt von im Wesentlichen 85 Grad zur Siegelebene (8) aufweist.

3. Portionskapsel (1) nach einem der vorhergehenden Ansprüche, wobei die Dichtsicke (10) derart ausgebildet ist, dass sie beim Schließen der Brühkammer (13) nur um maximal 30 %, bevorzugt um maximal 20 %, besonders bevorzugt um maximal 10 % und ganz besonders bevorzugt um maximal 5 % ihrer Höhe (8) senkrecht zur Siegelebene (8) deformiert wird.

4. Portionskapsel (1) nach einem der vorhergehenden Ansprüche, wobei die Dichtsicke (10) derart ausgebildet ist, dass sie bei einer senkrecht zur Siegelebene (8) auf die Dichtsicke (10) wirkenden Kraftbeaufschlagung von bis zu 100 N nur um maximal 30 %, bevorzugt um maximal 20 %, besonders bevorzugt um maximal 10 % und ganz besonders bevorzugt um maximal 5 % ihrer Höhe (18) senkrecht zur Siegelebene (8) deformiert wird.

5. Portionskapsel (1) nach einem der vorhergehenden Ansprüche, wobei die Dichtsicke (10) derart ausgebildet ist, dass sie beim Schließen der Brühkammer (13) nur soweit parallel zur Siegelebene (8) deformiert wird, dass sich ihr Radius bezogen auf eine zentrale Längsachse der Portionskapsel (1) nur um maximal 10 %, bevorzugt um maximal 8 %, besonders bevorzugt um maximal 5 % und ganz besonders bevorzugt um maximal 4 % parallel zur Siegelebene (8) verschiebt.

6. Portionskapsel (1) nach Anspruch 1, wobei im radialen Querschnitt der umlaufenden Dichtsicke (10) die innere Flanke (11) und die äußere Flanke (12) jeweils einen geradlinigen Kontaktbereich (17) aufweist, der sich zwischen dem Flansch (6) und dem Übergangsbereich (15) erstreckt.

7. Portionskapsel (1) nach Anspruch 6, wobei der geradlinige Kontaktbereich (17) eine Länge von 0,1 bis 1,5 Millimeter, bevorzugt von 0,3 bis 1,3 Millimeter, besonders bevorzugt von 0,6 bis 1,0 Millimeter und ganz besonders bevorzugt von 0,7 bis 0,9 Millimeter aufweist.

8. Portionskapsel (1) nach einem der vorhergehenden Ansprüche, wobei die Portionskapsel (1) im Übergang vom geradlinigen Kontaktbereich (17) zum Übergangsbereich (15) auf der zum Kapseldeckel (4) zugewandten Seite einen Radius von 0,05 bis 0,2 Millimeter, bevorzugt von 0,09 bis 0,13 Millimeter und besonders bevorzugt von 0,11 aufweist.

9. Portionskapsel (1) nach einem der vorhergehenden Ansprüche, wobei die Portionskapsel (1) im Übergang von der äußeren Flanke (12) zum Übergangsbereich (15) auf der zum Kapseldeckel (4) zugewandten Seite einen Radius von 0,05 bis 0,2 Millimeter, bevorzugt von 0,09 bis 0,13 Millimeter und besonders bevorzugt von 0,11 aufweist.

10. Portionskapsel (1) nach einem der vorhergehenden Ansprüche, wobei die Höhe (18) der Dichtsicke (10) senkrecht zur Siegelebene (8) zwischen 0,6 und 1,3 Millimeter, bevorzugt zwischen 0,3 und 0,6 Millimeter und besonders bevorzugt zwischen 0,9 und 1,0 Millimeter umfasst.

11. Portionskapsel (1) nach einem der vorhergehenden Ansprüche, wobei die Dichtsicke (10) eine mittlere Materialstärke zwischen 0,05 und 0,3 Millimeter, bevorzugt zwischen 0,08 und 1,8 Millimeter, besonders bevorzugt zwischen 0,09 und 1,5 Millimeter und ganz besonders bevorzugt von im Wesentlichen 0,11 Millimetern umfasst.

12. Portionskapsel (1) nach einem der vorhergehenden Ansprüche, wobei im radialen Querschnitt der umlaufenden Dichtsicke (10) der Übergangsbereich (15) einen geradlinigen Verbindungsbereich aufweist, welcher eine Breite von zwischen 0,1 bis 0,4 Millimeter, bevorzugt zwischen 0,15 bis 0,35 Millimeter und besonders bevorzugt zwischen 0,2 und 0,3 Millimeter aufweist.

13. Portionskapsel (1) nach einem der vorhergehenden Ansprüche, wobei die Portionskapsel (1) im Übergang von der äußeren Flanke (12) zum parallel zur Siegelebene (8) verlaufenden Flanschbereich (19) auf der zum Kapseldeckel (4) zugewandten Seiten einen Radius von 0,1 bis 0,3 Millimeter, bevorzugt von 0,18 bis 0,24 Millimeter und besonders bevorzugt von 0,20 bis 0,22 aufweist.

14. Portionskapsel (1) nach einem der vorhergehenden Ansprüche, wobei die Portionskapsel (1) einen sich parallel zur Siegelebene (8) erstreckenden Flanschbereich (19) zwischen dem Wulst (9) und der äußeren Flanke (12) aufweist und wobei die Portionskapsel (1) einen sich zwischen der inneren Flanke (11) und der Kapselwandung (7) erstreckenden Flanschzwischenbereich (20) aufweist, wobei der Flanschbereich (19) und der Flanschzwischenbereich (20) entlang einer zur Siegelebene (8) senkrechten Vertikalrichtung (Y) auf gleicher Höhe liegen.

15. Portionskapsel (1) nach einem der vorhergehenden Ansprüche, wobei die Portionskapsel (1) im Übergang von der inneren Flanke (11) zu einem sich zwischen der Dichtsicke (10) und der Kapselwandung (7) erstreckenden Flanschzwischenbereich (20) auf der zum Kapseldeckel (4) zugewandten Seite einen Radius von 0,2 bis 0,35 Millimeter, bevorzugt von 0,26 bis 0,30 Millimeter und besonders bevorzugt von im Wesentlichen 0,28 aufweist.

16. Portionskapsel (1) nach einem der vorhergehenden Ansprüche, wobei im radialen Querschnitt der Flanschzwischenbereich (20) einen geradlinigen Abschnitt aufweist, der eine Länge zwischen 0,01 und 0,15 Millimeter, bevorzugt zwischen 0,06 und 0,10 Millimeter und besonders bevorzugt 0,08 Millimeter umfasst.

17. Portionskapsel (1) nach einem der vorhergehenden Ansprüche, wobei im radialen Querschnitt die Erstreckung der Siegelebene (8) zwischen der äußeren Flanke (12) und dem Wulst (9) eine Länge zwischen 0,2 und 0,8 Millimeter, bevorzugt zwischen 0,3 und 0,7 Millimeter und besonders bevorzugt zwischen 0,4 und 0,6 Millimeter umfasst.

18. Portionskapsel (1) nach einem der vorhergehenden Ansprüche, wobei der Wulst (9) über eine die Siegelebene (8) bildende Oberseite über den Flansch (6) vorsteht.

19. Portionskapsel (1) nach einem der vorhergehenden Ansprüche, wobei der Wulst (9) über eine der Siegelebene (8) abgewandten Unterseite vom Flansch (6) vorsteht, wobei der Flansch (6) auf der Unterseite weniger als die Dichtsicke (10) vom Flansch (6) absteht und/oder wobei der Wulst (9) auf der Oberseite weniger als auf der Unterseite über den Flansch (6) vorsteht.

20. Portionskapsel (1) nach einem der vorhergehenden Ansprüche, wobei der Wulst (9) durch ein Einrollen des Flanschrandes gebildet ist, wobei vorzugsweise der Flanschrand in Richtung Kapselboden (5) eingerollt ist.

21. Portionskapsel (1) nach einem der vorhergehenden Ansprüche, wobei das Basiselement (2) einstückig aus Aluminium gefertigt ist.

22. System zur Zubereitung eines Getränks aufweisend eine Getränkeherstellungsmaschine (14) und eine Portionskapsel (1) nach einem der vorhergehenden Ansprüche, wobei die Getränkeherstellungsmaschine (14) eine Brüheinheit mit einem ersten Brühkammerteil und einem zweiten Brühkammerteil aufweist, wobei das erste und/oder das zweite Brühkammerteil relativ zum anderen Brühkammerteil zwischen einer angenäherten Position, in welcher das erste und das zweite Brühkammerteil eine geschlossene Brühkammer (13) bilden, und einer offenen Position, in welcher das erste und das zweite Brühkammerteil zum Einsetzen oder Auswerfen einer Portionskapsel (1) voneinander beabstandet sind, bewegbar ist, wobei das erste Brühkammerteil ein Aufnahmeelement (22) zur teilweisen Aufnahme der Portionskapsel (1) und das zweite Brühkammerteil ein Verschlusselement (23) für das Aufnahmeelement umfasst, wobei in der geschlossenen Position der Flansch (6) der Portionskapsel (1) zwischen einem Randbereich (24) des Aufnahmeelements (22) und dem Verschlusselement (23) formschlüssig und dichtend aufgenommen ist.

23. System nach Anspruch 22, wobei im Randbereich (24) eine Dichtkontur zum dichtenden Eingriff mit der Dichtsicke (10) ausgebildet ist, wobei die Dichtkontur eine umlaufende Vertiefung (25) und eine benachbart zur Vertiefung (25) ausgebildete umlaufende Dichtnase (26) umfasst, wobei vorzugsweise die Vertiefung (25) in radialer Richtung (R) außerhalb der Dichtnase (26) angeordnet ist und wobei eine äußere Dichtnasenflanke (27) eine innere Wandung der Vertiefung (25) bildet.

24. System nach Anspruch 23, wobei in der geschlossenen Position die Dichtnase (26) in den Flanschzwischenbereich (20) und die Dichtsicke (10) in die Vertiefung (25) derart eingreifen, dass die Dichtnasenflanke (27) mit der inneren Flanke (11) in radialem Querschnitt einen Linienkontakt (28) ausbilden.

25. System nach Anspruch 24, wobei in der geschlossenen Position die Dichtsicke (10) durch die Dichtkontur nur um maximal 30 %, bevorzugt um maximal 20 %, besonders bevorzugt um maximal 10 % und ganz besonders bevorzugt um maximal 5 % ihrer Höhe (18) senkrecht zur Siegelebene (8) deformiert wird.

26. System nach einen der Ansprüche 22 bis 25, wobei die Dichtkontur eine weitere umlaufende Dichtnase (28) aufweist, wobei die Vertiefung (25) in radialer Richtung zwischen der Dichtnase (26) und der weiteren Dichtnase (28) angeordnet ist, wobei die Dichtnase (26) länger als die weitere Dichtnase (28) ausgebildet ist und wobei in der geschlossenen Position die weitere Dichtnase (28) mit der äußeren Flanke (12) im radialen Querschnitt einen Punktkontakt ausbildet.

## Claims

1. Portion capsule (1) for preparing a beverage in a brewing chamber (13) of a beverage-making machine (14), wherein the portion capsule (1) has a base element (2) with a cavity (3) for receiving a beverage raw material and has a capsule lid (4) which closes off the cavity (3), wherein the base element (2) comprises a capsule bottom (5), an encircling flange (6) and a capsule wall (7) which extends between the capsule bottom (5) and the encircling flange (6), wherein the capsule lid (4) is attached to a sealing plane (8) on the flange (6), wherein the flange (6) has an encircling bead (9) at its outer free end, wherein a sealing element in the form of a sealing embossment (10) which points away from the capsule lid (4) is provided on the flange (6), wherein the sealing plane (8) extends on the flange (6) on the side of the capsule lid (4) between the bead (9) and the sealing embossment (10), wherein the sealing embossment (10) comprises an inner flank (11) at the side of the capsule wall (7) and an outer flank (12) at the side of the bead (9), **characterized in that** both the outer flank (12) and the inner flank (11) are oriented at an angle (α, β) of 81 to 89 degrees to the sealing plane (8), wherein a transition region (15) extends between the inner flank (11) and the outer flank (12), wherein the transition region (15) has a transition plane (16) which extends parallel to the sealing plane (8).

2. Portion capsule according to Claim 1, wherein both the inner flank (11) and the outer flank (12) are at an angle (α, β) of 83 to 87 degrees, preferably of 84 to 86 degrees and particularly preferably of substantially 85 degrees to the sealing plane (8).

3. Portion capsule (1) according to one of the preceding claims, wherein the sealing embossment (10) is designed in such a way that, as the brewing chamber (13) is closed, said sealing embossment is deformed only by at most 30%, preferably by at most 20%, particularly preferably by at most 10% and very particularly preferably by at most 5% of its height (8) perpendicular to the sealing plane (8).

4. Portion capsule (1) according to one of the preceding claims, wherein the sealing embossment (10) is designed in such a way that, in the event of an exertion of force of up to 100 N on the sealing embossment (10) perpendicular to the sealing plane (8), said sealing embossment is deformed only by at most 30%, preferably by at most 20%, particularly preferably by at most 10% and very particularly preferably by at most 5% of its height (18) perpendicular to the sealing plane (8).

5. Portion capsule (1) according to one of the preceding claims, wherein the sealing embossment (10) is designed in such a way that, as the brewing chamber (13) is closed, said sealing embossment is deformed parallel to the sealing plane (8) only to such an extent that its radius in relation to a central longitudinal axis of the portion capsule (1) is displaced only by at most 10%, preferably by at most 8%, particularly preferably by at most 5% and very particularly preferably by at most 4%, parallel to the sealing plane (8).

6. Portion capsule (1) according to Claim 1, wherein, in the radial cross section of the encircling sealing embossment (10), the inner flank (11) and the outer flank (12) each have a rectilinear contact region (17) which extends between the flange (6) and the transition region (15).

7. Portion capsule (1) according to Claim 6, wherein the rectilinear contact region (17) has a length of 0.1 to 1.5 millimetres, preferably of 0.3 to 1.3 millimetres, particularly preferably of 0.6 to 1.0 millimetres and very particularly preferably of 0.7 to 0.9 millimetres.

8. Portion capsule (1) according to one of the preceding claims, wherein the portion capsule (1) has a radius of 0.05 to 0.2 millimetres, preferably of 0.09 to 0.13 millimetres and particularly preferably of 0.11 in the transition from the rectilinear contact region (17) to the transition region (15) on the side facing towards the capsule lid (4).

9. Portion capsule (1) according to one of the preceding claims, wherein the portion capsule (1) has a radius of 0.05 to 0.2 millimetres, preferably of 0.09 to 0.13 millimetres and particularly preferably of 0.11 in the transition from the outer flank (12) to the transition region (15) on the side facing towards the capsule lid (4).

10. Portion capsule (1) according to one of the preceding claims, wherein the height (18) of the sealing embossment (10) perpendicular to the sealing plane (8) ranges between 0.6 and 1.3 millimetres, preferably between 0.3 and 0.6 millimetres and particularly preferably between 0.9 and 1.0 millimetres.

11. Portion capsule (1) according to one of the preceding claims, wherein the sealing embossment (10) has an average material thickness of between 0.05 and 0.3 millimetres, preferably of between 0.08 and 1.8 millimetres, particularly preferably of between 0.09 and 1.5 millimetres and very particularly preferably of substantially 0.11 millimetres.

12. Portion capsule (1) according to one of the preceding claims, wherein, in the radial cross section of the encircling sealing embossment (10), the transition region (15) has a rectilinear connecting region which has a width of between 0.1 and 0.4 millimetres, preferably of between 0.15 and 0.35 millimetres and particularly preferably of between 0.2 and 0.3 millimetres.

13. Portion capsule (1) according to one of the preceding claims, wherein the portion capsule (1) has a radius of 0.1 to 0.3 millimetres, preferably of 0.18 to 0.24 millimetres and particularly preferably of 0.20 to 0.22 in the transition from the outer flank (12) to the flange region (19) extending parallel to the sealing plane (8) on the side facing towards the capsule lid (4).

14. Portion capsule (1) according to one of the preceding claims, wherein the portion capsule (1) has a flange region (19), which extends parallel to the sealing plane (8), between the bead (9) and the outer flank (12), and wherein the portion capsule (1) has a flange intermediate region (20) which extends between the inner flank (11) and the capsule wall (7), wherein the flange region (19) and the flange intermediate region (20) are situated at the same height along a vertical direction (Y) perpendicular to the sealing plane (8).

15. Portion capsule (1) according to one of the preceding claims, wherein the portion capsule (1) has a radius of 0.2 to 0.35 millimetres, preferably of 0.26 to 0.30 millimetres and particularly preferably of substantially 0.28 in the transition from the inner flank (11) to a flange intermediate region (20), which extends between the sealing embossment (10) and the capsule wall (7), on the side facing towards the capsule lid (4).

16. Portion capsule (1) according to one of the preceding claims, wherein, in radial cross section, the flange intermediate region (20) has a rectilinear section which comprises a length of between 0.01 and 0.15 millimetres, preferably of between 0.06 and 0.10 millimetres and particularly preferably of 0.08 millimetres.

17. Portion capsule (1) according to one of the preceding claims, wherein, in radial cross section, the extent of the sealing plane (8) between the outer flank (12) and the bead (9) comprises a length of between 0.2 and 0.8 millimetres, preferably of between 0.3 and 0.7 millimetres and particularly preferably of between 0.4 and 0.6 millimetres.

18. Portion capsule (1) according to one of the preceding claims, wherein the bead (9) protrudes over the flange (6) over a top side which forms the sealing plane (8).

19. Portion capsule (1) according to one of the preceding claims, wherein the bead (9) protrudes from the flange (6) over a bottom side which faces away from the sealing plane (8), wherein the flange (6), on the bottom side, projects from the flange (6) to a lesser extent than the sealing embossment (10), and/or wherein the bead (9) protrudes over the flange (6) to a lesser extent on the top side than on the bottom side.

20. Portion capsule (1) according to one of the preceding claims, wherein the bead (9) is formed by rolling-up of the flange edge, wherein the flange edge is preferably rolled up in the direction of the capsule bottom (5).

21. Portion capsule (1) according to one of the preceding claims, wherein the base element (2) is manufactured in one piece from aluminium.

22. System for preparing a beverage, having a beverage-making machine (14) and a portion capsule (1) according to one of the preceding claims, wherein the beverage-making machine (14) has a brewing unit with a first brewing-chamber part and a second brewing-chamber part, wherein the first and/or the second brewing-chamber part is movable relative to the other brewing-chamber part between an approached position, in which the first and second brewing-chamber parts form a closed brewing chamber (13), and an open position, in which the first and second brewing-chamber parts are spaced apart from one another for insertion or ejection of a portion capsule (1), wherein the first brewing-chamber part comprises a receiving element (22) for partially receiving the portion capsule (1) and the second brewing chamber part comprises a closure element (23) for the receiving element, wherein, in the closed position, the flange (6) of the portion capsule (1) is received in a form-fitting and sealing manner between an edge region (24) of the receiving element (22) and the closure element (23).

23. System according to Claim 22, wherein, in the edge region (24), there is formed a sealing contour for sealing engagement with the sealing embossment (10), wherein the sealing contour comprises an encircling depression (25) and an encircling sealing lug (26) formed adjacent to the depression (25), wherein the depression (25) is preferably arranged outside the sealing lug (26) in a radial direction (R), and wherein an outer sealing-lug flank (27) forms an inner wall of the depression (25).

24. System according to Claim 23, wherein, in the closed position, the sealing lug (26) engages into the flange intermediate region (20) and the sealing embossment (10) engages into the depression (25) in such a way that the sealing-lug flank (27) together with the inner flank (11) form linear contact (28) in radial cross section.

25. System according to Claim 24, wherein, in the closed position, the sealing embossment (10) is deformed by the sealing contour only by at most 30%, preferably by at most 20%, particularly preferably by at most 10% and very particularly preferably by at most 5% of its height (18) perpendicular to the sealing plane (8).

26. System according to one of Claims 22 to 25, wherein the sealing contour has a further encircling sealing lug (28), wherein the depression (25) is arranged between the sealing lug (26) and the further sealing lug (28) in the radial direction, wherein the sealing lug (26) is formed so as to be longer than the further sealing lug (28), and wherein, in the closed position, the further sealing lug (28) forms punctiform contact with the outer flank (12) in radial cross section.

## Revendications

1. Capsule dosette (1) pour la préparation d'une boisson dans une chambre d'infusion (13) d'une machine de production de boissons (14), la capsule dosette (1) présentant un élément de base (2) avec une cavité (3) pour recevoir une matière première de boisson et un couvercle de capsule (4) fermant la cavité (3), dans laquelle l'élément de base (2) comprend un fond de capsule (5), une bride périphérique (6) et une paroi de capsule (7) s'étendant entre le fond de capsule (5) et la bride périphérique (6), dans laquelle le couvercle de capsule (4) est fixé à la bride (6) au niveau d'un plan de scellement (8), dans laquelle la bride (6) présente à son extrémité libre extérieure un bourrelet périphérique (9), dans laquelle un élément d'étanchéité est prévu sur la bride (6) sous la forme d'une moulure d'étanchéité (10) orientée à l'opposé du couvercle de capsule (4), dans laquelle le plan de scellement (8) s'étend sur la bride (6) du côté du couvercle de capsule (4) entre le bourrelet (9) et la moulure d'étanchéité (10), dans laquelle la moulure d'étanchéité (10) comprend un flanc intérieur (11) du côté de la paroi de capsule (7) et un flanc extérieur (12) du côté du bourrelet (9), **caractérisée en ce que** le flanc extérieur (12) et le flanc intérieur (11) sont tous deux orientés selon un angle (α, β) de 81 à 89 degrés par rapport au plan de scellement (8), dans laquelle une zone de transition (15) s'étend entre le flanc intérieur (11) et le flanc extérieur (12), dans laquelle la zone de transition (15) présente un plan de transition (16) s'étendant parallèlement au plan de scellement (8).

2. Capsule dosette selon la revendication 1, dans laquelle le flanc intérieur (11) et le flanc extérieur (12) présentent tous deux un angle (α, β) de 83 à 87 degrés, de préférence de 84 à 86 degrés et de manière particulièrement préférée d'essentiellement 85 degrés par rapport au plan de scellement (8).

3. Capsule dosette (1) selon l'une quelconque des revendications précédentes, dans laquelle la moulure d'étanchéité (10) est réalisée de telle sorte que, lors de la fermeture de la chambre d'infusion (13), elle n'est déformée que de 30 % au maximum, de préférence de 20 % au maximum, de manière particulièrement préférée de 10 % au maximum et de manière tout particulièrement préférée de 5 % au maximum de sa hauteur (8) perpendiculairement au plan de scellement (8).

4. Capsule dosette (1) selon l'une quelconque des revendications précédentes, dans laquelle la moulure d'étanchéité (10) est réalisée de telle sorte que, lors de l'application d'une force de jusqu'à 100 N agissant sur la moulure d'étanchéité (10) perpendiculairement au plan de scellement (8), elle n'est déformée que de 30 % au maximum, de préférence de 20 % au maximum, de manière particulièrement préférée de 10 % au maximum et de manière tout particulièrement préférée de 5 % au maximum de sa hauteur (18) perpendiculairement au plan de scellement (8).

5. Capsule dosette (1) selon l'une quelconque des revendications précédentes, dans laquelle la moulure d'étanchéité (10) est réalisée de telle sorte que, lors de la fermeture de la chambre d'infusion (13), elle n'est déformée parallèlement au plan de scellement (8) que dans une mesure telle que son rayon, par rapport à un axe longitudinal central de la capsule dosette (1), ne se déplace parallèlement au plan de scellement (8) que de 10 % au maximum, de préférence de 8 % au maximum, de manière particulièrement préférée de 5 % au maximum et de manière tout particulièrement préférée de 4 % au maximum.

6. Capsule dosette (1) selon la revendication 1, dans laquelle, dans la section transversale radiale de la moulure d'étanchéité périphérique (10), le flanc intérieur (11) et le flanc extérieur (12) présentent chacun une zone de contact rectiligne (17) qui s'étend entre la bride (6) et la zone de transition (15).

7. Capsule dosette (1) selon la revendication 6, dans laquelle la zone de contact rectiligne (17) présente une longueur de 0,1 à 1,5 millimètre, de préférence de 0,3 à 1,3 millimètre, de manière particulièrement préférée de 0,6 à 1,0 millimètre et de manière tout particulièrement préférée de 0,7 à 0,9 millimètre.

8. Capsule dosette (1) selon l'une quelconque des revendications précédentes, la capsule dosette (1) présentant, au niveau de la transition de la zone de contact rectiligne (17) à la zone de transition (15), sur le côté tourné vers le couvercle de capsule (4), un rayon de 0,05 à 0,2 millimètre, de préférence de 0,09 à 0,13 millimètre et de manière particulièrement préférée de 0,11.

9. Capsule dosette (1) selon l'une quelconque des revendications précédentes, la capsule dosette (1) présentant, au niveau de la transition du flanc extérieur (12) à la zone de transition (15), sur le côté tourné vers le couvercle de capsule (4), un rayon de 0,05 à 0,2 millimètre, de préférence de 0,09 à 0,13 millimètre et de manière particulièrement préférée de 0,11.

10. Capsule dosette (1) selon l'une quelconque des revendications précédentes, dans laquelle la hauteur (18) de la moulure d'étanchéité (10) perpendiculairement au plan de scellement (8) est comprise entre 0,6 et 1,3 millimètre, de préférence entre 0,3 et 0,6 millimètre et de manière particulièrement préférée entre 0,9 et 1,0 millimètre.

11. Capsule dosette (1) selon l'une quelconque des revendications précédentes, dans laquelle la moulure d'étanchéité (10) présente une épaisseur de matériau moyenne d'entre 0,05 et 0,3 millimètre, de préférence d'entre 0,08 et 1,8 millimètre, de manière particulièrement préférée d'entre 0,09 et 1,5 millimètre, et de manière tout particulièrement préférée d'essentiellement 0,11 millimètre.

12. Capsule dosette (1) selon l'une quelconque des revendications précédentes, dans laquelle, dans la section transversale radiale de la moulure d'étanchéité périphérique (10), la zone de transition (15) présente une zone de liaison rectiligne qui présente une largeur d'entre 0,1 et 0,4 millimètre, de préférence d'entre 0,15 et 0,35 millimètre et de manière particulièrement préférée d'entre 0,2 et 0,3 millimètre.

13. Capsule dosette (1) selon l'une quelconque des revendications précédentes, la capsule dosette (1) présentant, au niveau de la transition du flanc extérieur (12) à la zone de bride (19) s'étendant parallèlement au plan de scellement (8), sur les côtés tournés vers le couvercle de capsule (4), un rayon de 0,1 à 0,3 millimètre, de préférence de 0,18 à 0,24 millimètre et de manière particulièrement préférée de 0,20 à 0,22.

14. Capsule dosette (1) selon l'une quelconque des revendications précédentes, la capsule dosette (1) présentant une zone de bride (19) s'étendant parallèlement au plan de scellement (8) entre le bourrelet (9) et le flanc extérieur (12) et la capsule dosette (1) présentant une zone intermédiaire de bride (20) s'étendant entre le flanc intérieur (11) et la paroi de capsule (7), dans laquelle la zone de bride (19) et la zone intermédiaire de bride (20) sont à la même hauteur le long d'une direction verticale (Y) perpendiculaire au plan de scellement (8).

15. Capsule dosette (1) selon l'une quelconque des revendications précédentes, la capsule dosette (1) présentant, au niveau de la transition du flanc intérieur (11) à une zone intermédiaire de bride (20) s'étendant entre la moulure d'étanchéité (10) et la paroi de capsule (7), sur le côté tourné vers le couvercle de capsule (4), un rayon de 0,2 à 0,35 millimètre, de préférence de 0,26 à 0,30 millimètre et de manière particulièrement préférée d'essentiellement 0,28.

16. Capsule dosette (1) selon l'une quelconque des revendications précédentes, dans laquelle, dans la section transversale radiale, la zone intermédiaire de bride (20) présente une section rectiligne qui présente une longueur d'entre 0,01 et 0,15 millimètre, de préférence d'entre 0,06 et 0,10 millimètre et de manière particulièrement préférée de 0,08 millimètre.

17. Capsule dosette (1) selon l'une quelconque des revendications précédentes, dans laquelle, dans la section transversale radiale, l'extension du plan de scellement (8) entre le flanc extérieur (12) et le bourrelet (9) présente une longueur d'entre 0,2 et 0,8 millimètre, de préférence d'entre 0,3 et 0,7 millimètre et de manière particulièrement préférée d'entre 0,4 et 0,6 millimètre.

18. Capsule dosette (1) selon l'une quelconque des revendications précédentes, dans laquelle le bourrelet (9) fait saillie au-dessus de la bride (6) sur un côté supérieur formant le plan de scellement (8).

19. Capsule dosette (1) selon l'une quelconque des revendications précédentes, dans laquelle le bourrelet (9) fait saillie de la bride (6) sur un côté inférieur détourné du plan de scellement (8), dans laquelle la bride (6) dépasse de la bride (6) sur le côté inférieur moins que la moulure d'étanchéité (10) et/ou dans laquelle le bourrelet (9) fait saillie au-dessus de la bride (6) sur le côté supérieur moins que sur le côté inférieur.

20. Capsule dosette (1) selon l'une quelconque des revendications précédentes, dans laquelle le bourrelet (9) est formé par un enroulement du bord de bride, dans laquelle de préférence le bord de bride est enroulé en direction du fond de la capsule (5).

21. Capsule dosette (1) selon l'une quelconque des revendications précédentes, dans laquelle l'élément de base (2) est fabriqué d'un seul tenant en aluminium.

22. Système pour la préparation d'une boisson comprenant une machine de production de boissons (14) et une capsule dosette (1) selon l'une quelconque des revendications précédentes, dans lequel la machine de production de boissons (14) comprend une unité d'infusion comprenant une première partie de chambre d'infusion et une deuxième partie de chambre d'infusion, dans lequel la première et/ou la deuxième partie de chambre d'infusion peut être déplacée par rapport à l'autre partie de chambre d'infusion entre une position rapprochée, dans laquelle la première et la deuxième partie de chambre d'infusion forment une chambre d'infusion fermée (13), et une position ouverte, dans laquelle la première et la deuxième partie de chambre d'infusion sont éloignées l'une de l'autre pour l'insertion ou l'éjection d'une capsule dosette (1), dans lequel la première partie de chambre d'infusion comprend un élément de réception (22) pour la réception partielle de la capsule dosette (1) et la deuxième partie de chambre d'infusion comprend un élément de fermeture (23) pour l'élément de réception, dans lequel, dans la position fermée, la bride (6) de la capsule dosette (1) est reçue par complémentarité de forme et de manière étanche entre une zone de bord (24) de l'élément de réception (22) et l'élément de fermeture (23) .

23. Système selon la revendication 22, dans lequel un contour d'étanchéité est réalisé dans la zone de bord (24) pour l'engagement étanche avec la moulure d'étanchéité (10), dans lequel le contour d'étanchéité comprend un renfoncement périphérique (25) et un nez d'étanchéité périphérique (26) réalisé au voisinage du renfoncement (25), dans lequel de préférence le renfoncement (25) est agencé dans la direction radiale (R) à l'extérieur du nez d'étanchéité (26) et dans lequel un flanc de nez d'étanchéité extérieur (27) forme une paroi intérieure du renfoncement (25).

24. Système selon la revendication 23, dans lequel, dans la position fermée, le nez d'étanchéité (26) s'engage dans la zone intermédiaire de bride (20) et la moulure d'étanchéité (10) s'engage dans le renfoncement (25) de telle sorte que le flanc de nez d'étanchéité (27) réalise un contact linéaire (28) avec le flanc intérieur (11) dans la section transversale radiale.

25. Système selon la revendication 24, dans lequel, dans la position fermée, la moulure d'étanchéité (10) n'est déformée par le contour d'étanchéité que de 30 % au maximum, de préférence de 20 % au maximum, de manière particulièrement préférée de 10 % au maximum et de manière tout particulièrement préférée de 5 % au maximum de sa hauteur (18) perpendiculairement au plan de scellement (8).

26. Système selon l'une quelconque des revendications 22 à 25, dans lequel le contour d'étanchéité présente un autre nez d'étanchéité périphérique (28), dans lequel le renfoncement (25) est agencé dans la direction radiale entre le nez d'étanchéité (26) et l'autre nez d'étanchéité (28), dans lequel le nez d'étanchéité (26) est réalisé plus long que l'autre nez d'étanchéité (28) et dans lequel, dans la position fermée, l'autre nez d'étanchéité (28) réalise un contact ponctuel avec le flanc extérieur (12) dans la section transversale radiale.
